# EUROPÄISCHE PATENTSCHRIFT

(11) **EP 1 441 133 B1**
(45) Veröffentlichungstag und Bekanntmachung des Hinweises auf die Patenterteilung: **13.07.2005**
(21) Anmeldenummer: 03028836.9
(22) Anmeldetag: 16.12.2003
(51) Int. Cl.: F16B 13/14

(54) **Verfahren zum Befestigen in Untergründen mit Hohlräumen**
Method for fastening in undergrounds with cavities
Procédure de fixation dans les objets avec des cavités

(30) Priorität: 23.01.2003 DE 10302490
(43) Veröffentlichungstag der Anmeldung: 28.07.2004
(73) Patentinhaber: fischerwerke Artur Fischer GmbH & Co. KG, 72178 Waldachtal (DE)
(72) Erfinder: Vogel, Martin, Dr., 79286 Glottertal (DE); Grün, Jürgen, 79268 Bötzingen (DE); Schätzle, Joachim, Dr., 79341 Kenzingen (DE); Jakob, Rainer, 79111 Freiburg (DE)

(56) Entgegenhaltungen:
- DE-A- 10 010 473
- US-A- 4 944 819

## Beschreibung

Die Erfindung betrifft ein Verfahren zum Befestigen in Untergründen mit Hohlräumen, wie Hohlkammerbausteinen oder dgl. (US-A-4 944 819).

Aufgrund ihrer Hohlräume ist die stabile Befestigung in Hohlkammerbausteinen wie Langlochziegeln, Hochlochziegeln, Kalksandlochsteinen, Leichthochlochziegeln, Leichtbetonhochlochblocksteinen oder anderen Untergründen mit Hohlräumen problematisch. Aus dem Stand der Technik ist es bekannt, Befestigungen in derartigen Untergründen mittels aushärtbarer Mörtelmassen zu erstellen. Dazu wird zunächst ein Bohrloch in den Untergrund eingebracht, dann eine Ankerhülse in das Bohrloch gesteckt und anschließend die aushärtbare Mörtelmasse in die Ankerhülse eingespritzt. In die derart vorbereitete Ankerhülse wird noch vor dem Aushärten der Mörtelmasse eine Ankerstange eingebracht. Hierdurch wird die Mörtelmasse in der Ankerhülse verteilt. Durch den entstehenden Druck dringt die Mörtelmasse im Falle einer Siebhülse als Ankerhülse aus dieser teilweise aus oder - im Falle einer strumpfartigen Ankerhülse - die Ankerhülse weitet sich im Bereich der Hohlräume auf. In beiden Fällen bildet sich durch die Durchmesseraufweitung eine formschlüssige Verbindung mit dem Untergrund. Durch das Umschließen der Ankerstange wird diese wiederum formschlüssig in der ausgehärteten Mörtelmasse verankert. Als eine derartige Ankerstange kann beispielsweise eine über das Bohrloch hinausstehende Gewindestange zum Befestigen eines Gegenstandes dienen.

Der Nachteil einer derartigen Befestigung liegt in der recht kleinen radialen Ausdehnung der ausdringenden Mörtelmasse bzw. der aufgeweiteten strumpfartigen Ankerhülse. Da die betreffenden Untergründe häufig sehr brüchig sind, treten bei unvorsichtigem Bohren des Bohrlochs häufig Bohrschäden auf, die insbesondere zu einem sehr großen Loch in den innenliegenden Wänden des Untergrunds führen. Teilweise entstehen derartige Schäden, dass diese Wände überhaupt keine tragende Funktion mehr ausüben können. Durch die geringe radiale Ausdehnung der ausdringenden Mörtelmasse bzw. der aufgeweiteten strumpfartigen Ankerhülse kommt es in derartigen Fällen häufig zu einer unzureichenden Verankerung.

Der Erfindung liegt daher die Aufgabe zugrunde, eine sichere, stabile Verankerung in Untergründen mit Hohlräumen zu schaffen.

Diese Aufgabe wird erfindungsgemäß durch das Verfahren mit den Merkmalen des Anspruchs 1 gelöst. Nach dem Einbringen eines Bohrlochs in den Untergrund werden die durch das Bohrloch zugänglichen Hohlräume zunächst zumindest teilweise durch einen aushärtbaren Schaum ausgespritzt. Noch bevor der Schaum vollständig ausgehärtet ist, wird Mörtelmasse und ein Befestigungselement in das Bohrloch eingebracht. Durch das Injizieren eines aushärtbaren Schaums werden die Hohlräume des Untergrunds zumindest teilweise geschlossen. Dies stabilisiert einerseits den Untergrund in sich, da beispielsweise gebrochene Innenwände durch den Schaum abgestützt werden. Andererseits bietet der Schaum der anschließend eingebrachten Mörtelmasse sehr guten Halt. So wird es möglich, dass die Mörtelmasse mit ihrer gesamten Außenfläche mit dem Schaum in Kontakt ist und hierdurch die von dem Befestigungselement in die ausgehärtete Mörtelmasse eingeleiteten Kräfte großflächig über den Schaum in den Untergrund eingeleitet werden. Insbesondere bei offenporigen Schäumen entsteht dabei eine Vielzahl von hinterschneidenden Verbindungen zwischen Schaum und Mörtelmasse. Zum Einbringen des Schaums wird eine Injektionshülse verwendet, die seitliche Öffnungen aufweist, um den Schaum gut in den Hohlräumen des Untergrunds verteilen zu können. In die Injektionshülse wird mit einer Zwei-Kammer-Kartusche eingespritzt, wobei ein auf die Zwei-Kammer-Kartusche aufgesetzter Statikmischer für das Vermischen der Komponenten vor dem Eintritt in die Injektionshülse sorgt. Die Befestigung eines Gegenstandes erfolgt nach dem Aushärten von Schaum und Mörtel am Befestigungselement. Neben der guten Verankerung ergibt sich aus diesem Verfahren insbesondere der Vorteil, dass eine Ankerhülse entfällt. Da diese häufig in unterschiedlichen Durchmessern bereit gehalten werden müssen, kann hierdurch die Zahl der zum Befestigungssortiment gehörenden Artikel reduziert werden.

In einer bevorzugten Ausführung des Verfahrens wird nach dem Einbringen des Schaums zuerst die aushärtbare Mörtelmasse eingespritzt und hierein das Befestigungselement gesteckt. Zum Einspritzen der Mörtelmasse kann wiederum eine Injektionshülse verbunden mit einem Statikmischer auf einer Zwei-Kammer-Kartusche verwendet werden. Durch das Einbringen des Befestigungselements in die Mörtelmasse wird diese verdrängt, verdichtet und legt sich großflächig an den Schaum an. Dieser wird gegebenenfalls dadurch, dass er noch nicht vollständig ausgehärtet ist, teilweise ebenfalls verdrängt. Auch ist eine Vermischung von Schaum und Mörtel in deren Kontaktzone möglich. Das Befestigungselement kann beispielsweise eine Vorsprünge aufweisende Ankerstange, ein Gewindestab, ein Bewehrungsstab oder eine Gewindehülse sein. An ihm erfolgt beispielsweise die Befestigung eines Gegenstandes.

In einer alternativen Ausführung des Verfahrens wird nach dem Einbringen des Schaums zunächst ein Befestigungselement in das Bohrloch gesteckt und dann durch dieses hindurch der aushärtbare Mörtel eingespritzt. Dabei kann beispielsweise ein Befestigungselement mit Innengewinde und Injektionsadapter sowie eine hierauf abgestimmte Injektionsvorrichtung zum Einsatz kommen.

Zur Ausführung des Verfahrens wird vorzugsweise ein aushärtender Schaum verwendet, der beim Aushärten durch Polymerisation von einem flüssigen oder breiartigen Zustand in den festen Zustand übergeht. Die Erfindung schlägt vor, dass der Schaum ein MehrKomponenten-Reaktionsmörtel ist, der organische Bestandteile zur Gasbildung als Treibmittel in einer oder mehreren Komponenten enthält. Gegenüber anorganischen Treibmitteln, wie beispielsweise die Mischung von Polycarbonsäuren und anorganischem Carbonat, haben organische Treibmittel den Vorteil, dass durch ein molekulardisperses Vorliegen der Treibmittel eine sehr feine Blasenbildung erreicht werden kann. Dies führt zu einem homogenen und festen Gefüge. Durch die Zugabe von Inhibitoren kann die Gasbildung außerdem zeitlich so gesteuert werden, dass sie erst im Bohrloch stattfindet.

Als derartige organische Treibmittel können vorzugsweise einerseits Isocyanate wirken, die mit Wasser in einer der anderen Komponenten des Reaktionsmörtels zur Erzeugung von Kohlendioxid führen. Andererseits können Lösungsmittel verwendet werden, die durch die auftretende Reaktionswärme verdampfen und auf diese Weise als Treibmittel wirken. Die Lösungsmittel müssen daher so gewählt werden, dass ihr Siedepunkt über den üblichen Lager- und Transporttemperaturen des Reaktionsharzmörtels (also ca. 30 °C) und unterhalb einer für Baustellenverhältnisse angemessenen maximalen Reaktionstemperatur (ca. 80 °C) liegen. In Frage kommen daher beispielsweise chlorierte und/oder fluorierte Kohlenwasserstoffe, Aceton, Essigester, Pentan oder dgl.

Die Erfindung wird nachfolgend anhand zweier in der Zeichnung dargestellter Verfahren als Ausführungsbeispiele näher erläutert. Es zeigen:
- Figur 1: eine Schnittdarstellung einer Injektionshülse vor dem Einspritzen des Schaums in ein Bohrloch;
- Figur 2: eine Darstellung eines im Bohrloch verankerten Befestigungselements; und
- Figur 3: eine Darstellung der Verankerung eines weiteren Ausführungsbeispiels eines Befestigungselements.

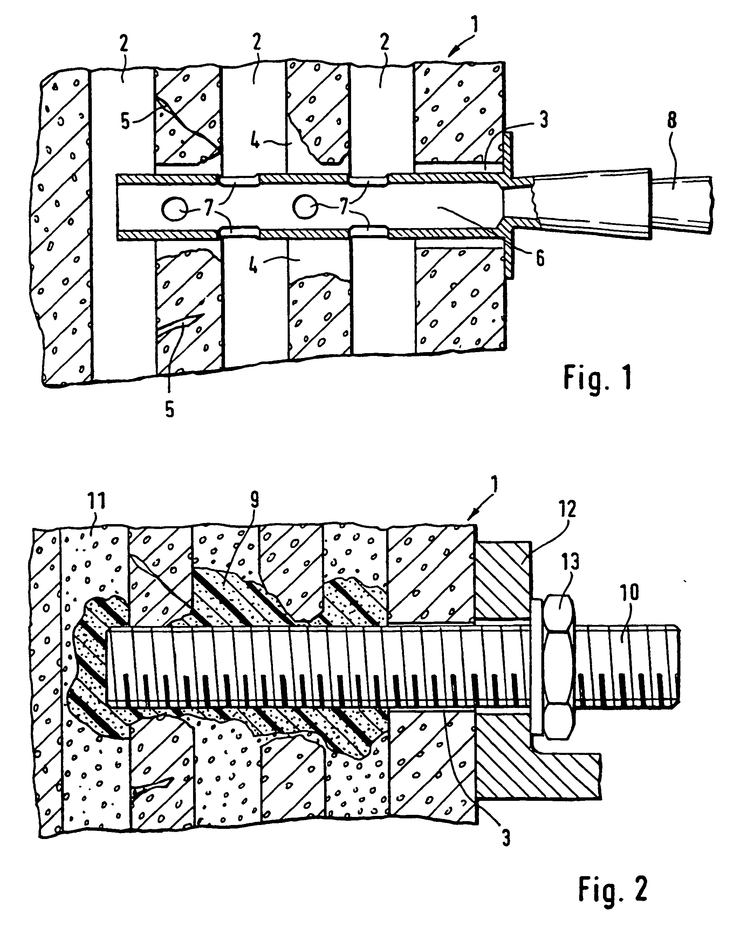

Beiden Ausführungsbeispielen des Verfahrens zum Befestigen in Untergründen sind die in Figur 1 gezeigten ersten Verfahrensschritte gemeinsam. In den Untergrund 1, beispielsweise ein Hochlochziegel, mit den Hohlräumen 2 wird im ersten Schritt ein Bohrloch 3 eingebracht. Aufgrund der Sprödigkeit des Untergrunds 1 kommt es dabei zu zahlreichen Ausbrüchen 4 und Rissen 5. Zum Einspritzen des aushärtbaren Schaums (nicht dargestellt) wird eine Injektionshülse 6 mit seitlichen Öffnungen 7 in das Bohrloch 3 eingeführt. Die Injektionshülse 6 ist auf das Mundstück 8 eines Statikmischers aufgesteckt, der wiederum auf eine Zweikammerkartusche (nicht dargestellt) aufgeschraubt ist. Beim Einspritzen des Schaums in das Bohrloch 3 und die Hohlräume 2 werden zwei Komponenten der Ausgangsstoffe des Schaums im Statikmischer vermischt und gelangen durch ihren Kontakt in Reaktion miteinander. Durch den in der Zweikammerkartusche erzeugten Druck dringt das reagierende Gemisch durch die Öffnungen 7 aus der Injektionshülse 6. Bereits vor der Polymerisation, die zum Aushärten führt, wird ein organisches Treibmittel aktiv, das durch die Erzeugung eines Gases zur Schaumbildung führt. Hierdurch erfolgt eine extreme Volumenzunahme und in der Folge eine weitgehend vollständige Ausfüllung der Hohlräume 2. Nachdem eine vorgegebene Menge des Schaums eingespritzt wurde, wird die Injektionshülse 6 aus dem Bohrloch 3 gezogen.

Noch bevor der Schaum vollständig ausgehärtet ist, wird ein Befestigungselement und ein aushärtender Mörtel in das Bohrloch eingebracht. Figur 2 zeigt das Ergebnis einer Verfahrensvariante, bei der zunächst der aushärtende Mörtel 9 (bereits ausgehärtet dargestellt) eingebracht wird. Bei dem Mörtel handelt es sich zum Zeitpunkt der Injektion um ein pastöses Gemisch, insbesondere aus den polymerisierenden Komponenten und festen Zuschlagsstoffen. Zur Injektion kann wiederum eine mit der Injektionshülse 6 vergleichbare Vorrichtung (nicht dargestellt) verwendet werden. Durch das anschließende Einstecken des als Gewindestange 10 ausgeführten Befestigungselements wird der Mörtel 9 verdichtet und verdrängt. Er tritt in Kontakt mit dem noch nicht vollständig ausgehärteten Schaum 11, wodurch dieser ebenfalls verdrängt und verdichtet wird. Teilweise kommt es dabei zu einer Vermischung von Mörtel 9 und Schaum 11, teilweise dringt der Mörtel 9 in die offenen, bereits ausgehärteten Poren des Schaums 11 ein. Hierdurch kommt es zu einer innigen, formschlüssigen Verbindung von Mörtel 9 und Schaum 11. Mit dem vollständigen Aushärten von Mörtel 9 und Schaum 11 ist die Gewindestange 10 fest im Untergrund 1 verankert. Sie kann beispielsweise zur Befestigung des Gegenstands 12 mittels einer Mutter 13 genutzt werden. Dadurch, dass die Hohlräume des Untergrunds 1 im Bereich der Befestigung vollständig ausgefüllt werden, durch die hohe Festigkeit des Mörtels 9 und die kraftverteilende Wirkung des ausgehärteten Schaums 11 werden die an der Gewindestange 10 wirkenden Kräfte großflächig in den Untergrund 1 eingeleitet und dieser in sich selbst stabilisiert. Gegenüber den bekannten Systemen kann hierdurch die Festigkeit gegen Auszug der Gewindestange 10 erheblich gesteigert werden.

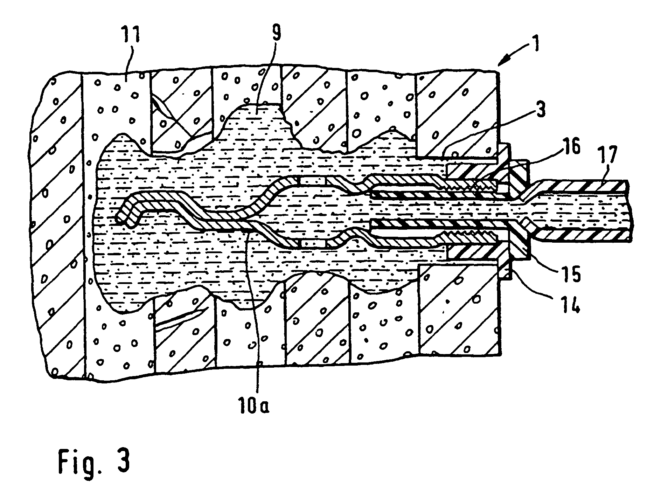

In Figur 3 ist eine andere Ausführung des Verfahrens dargestellt, bei der im Anschluss an die Injektion des Schaums 11 zunächst das Befestigungselement 10a in das Bohrloch 3 eingesetzt wird. Das Flanschelement 14 sorgt für einen axialen Anschlag des Befestigungselements 10a und verhindert ein Austreten des Mörtels 9 (hier in der pastösen Ausgangsform dargestellt) aus der Bohrung 3. In das Befestigungselement 10a ist ein Injektionsadapter 15 eingesetzt, der dafür sorgt, dass das Innengewinde 16 des Befestigungselements 10a für eine spätere Befestigung eines Gegenstands frei bleibt. Er wird nach dem Injizieren mit der Injektionsvorrichtung 17 herausgenommen. Bezüglich der Wechselwirkung zwischen Mörtel 9 und Schaum 11 ergeben sich die gleichen Mechanismen wie zuvor dargestellt.

## Patentansprüche

1. Verfahren zum Befestigen in Untergründen (1) mit Hohlräumen (2), wie Hohlkammerbausteinen oder dgl., wobei in den Untergrund (1) ein Bohrloch (3) eingebracht wird und in die durch das Bohrloch (3) zugänglichen Hohlräume (2) des Untergrunds (1) ein aushärtbarer Schaum (11) mittels einer Injektionshülse (6) eingebracht wird, und anschließend noch vor dem vollständigen Aushärten des Schaums (11) eine aushärtbare Mörtelmasse (9), und ein Befestigungselement (10, 10a) in das Bohrloch eingebracht wird.

2. Verfahren nach Anspruch 1, **dadurch gekennzeichnet, dass** zuerst die aushärtbare Mörtelmasse (9) und dann das Befestigungselement (10) in das Bohrloch (3) eingebracht wird.

3. Verfahren nach Anspruch 1, **dadurch gekennzeichnet, dass** die aushärtbare Mörtelmasse (9) durch das zuvor gesetzte Befestigungselement (10a) in das Bohrloch (3) eingebracht wird.

4. Verfahren nach Anspruch 1, **dadurch gekennzeichnet, dass** der Schaum (11) ein Mehr-, insbesondere Zwei-Komponenten-Reaktionsmörtel ist, wobei der Reaktionsmörtel **gekennzeichnet ist durch** die Anwesenheit einer oder mehrerer gasbildender organischer Bestandteile in einer oder mehrerer der Komponenten.

5. Verfahren nach Anspruch 4, **dadurch gekennzeichnet, dass** eine der Komponenten Wasser, die andere ein organisches Isocyanat beinhaltet, und/oder eine oder beide Komponenten ein bei der Reaktion der Komponenten durch die auftretende Reaktionswärme verdampfendes Lösungsmittel beinhaltet.

## Claims

1. Method of fastening in substrates (1) having cavities (2) such as hollow-chamber building blocks or the like, wherein a drilled hole (3) is introduced into the substrate (1), and a curable foam (11) is introduced by means of an injection sleeve (6) into the cavities (2) of the substrate (1) which are accessible through the drilled hole (3), and subsequently, before the foam (11) has fully cured, a curable mortar compound (9) and a fastening element (10, 10a) are introduced into the drilled hole.

2. Method according to claim 1, **characterised in that** first the curable mortar compound (9) and then the fastening element (10) are introduced into the drilled hole (3).

3. Method according to claim 1, **characterised in that** the curable mortar compound (9) is introduced into the drilled hole (3) through the previously installed fastening element (10a).

4. Method according to claim 1, **characterised in that** the foam (11) is a multicomponent, especially two-component, reaction-type mortar, the reaction-type mortar being **characterised by** the presence of one or more gas-forming organic constituents in one or more of the components.

5. Method according to claim 4, **characterised in that** one of the components comprises water, the other compnses an organic isocyanate, and/or one or both components comprise(s) a solvent that evaporates, on reaction of the components, as a result of the heat of reaction that occurs.

## Revendications

1. Procédé de fixation dans des sous-sols (1) comprenant des espaces creux (2), comme des blocs de construction de chambre creuse ou similaires, une forure (3) étant introduite dans le sous-sol (1) et une mousse thermodurcissable (11) étant introduite au moyen d'une gaine d'injection (6) dans les espaces creux (2) du sous-sol (1) accessibles par la forure (3), et ensuite une masse pour mortier thermodurcissable (9) et un élément de fixation (10, 10a) étant introduits dans la forure, bien avant que la mousse (11) ait complètement durci.

2. Procédé selon la revendication 1, **caractérisé en ce que** la masse pour mortier thermodurcissable (9) est tout d'abord introduite dans la forure (3), et ensuite l'élément de fixation (10).

3. Procédé selon la revendication 1, **caractérisé en ce que** la masse pour mortier thermodurcissable (9) est introduite dans la forure (3) par l'élément de fixation (10a) précédemment installé.

4. Procédé selon la revendication 1, **caractérisé en ce que** la mousse (11) est un mortier réactionnel multicomposants, en particulier à deux composants, le mortier réactionnel étant **caractérisé par** la présence d'un ou de plusieurs composant(s) organique(s) formant un gaz dans un ou plusieurs des composants.

5. Procédé selon la revendication 4, **caractérisé en ce qu'**un des composants contient de l'eau, l'autre contient un isocyanate organique, et/ou un ou les deux composant(s) contien(nen)t un solvant s'évaporant lorsque les composants réagissent à l'apparition de la chaleur de réaction.
